# EUROPÄISCHE PATENTANMELDUNG

(11) **EP 4 715 326 A1**
(43) Veröffentlichungstag der Anmeldung: **25.03.2026**
(21) Anmeldenummer: 25188194.2
(22) Anmeldetag: 08.07.2025
(51) Int. Cl.: G01B 13/00

(54) **PNEUMATISCHE MESSVORRICHTUNG**

(30) Priorität: 23.09.2024 DE 102024127452
(71) Anmelder: JENOPTIK Industrial Metrology Germany GmbH, 78052 Villingen-Schwenningen (DE)
(72) Erfinder: MÜLLER, Rubin, 78078 Fischbach (DE); BOISGERAULT, Fréderic, 14400 Bayeux (FR)
(74) Vertreter: Hoefer & Partner Patentanwälte mbB

(57) **Zusammenfassung**

Eine pneumatische Messvorrichtung 2 weist einen Grundkörper 4, der eine Wandlereinheit 8 zur Wandlung pneumatischer Signale in elektrische Signale aufweist, und einen auswechselbaren, lösbar mit dem Grundkörper 4 verbindbaren und in einer Messposition mit dem Grundkörper 4 verbundenen Düsenkörper 6 auf, in oder an dem wenigstens eine Düse der pneumatischen Messvorrichtung 2 gebildet ist. Erfindungsgemäß ist mit dem Düsenkörper 6 ein elektronisches Speicherelement 16 fest verbunden, das in Messposition des Düsenkörpers 6 an dem Grundkörper 4 durch die Wandlereinheit 8 auslesbar ist oder ausgelesen wird.

## Beschreibung

Die Erfindung betrifft eine pneumatische Messvorrichtung der im Oberbegriff des Anspruchs 1 genannten Art.

Pneumatische Messvorrrichtungen sind allgemein bekannt und dienen beispielsweise in der dimensionellen Messtechnik dazu, berührungslose Messungen mit einer sehr hohen Auflösung von beispielsweise bis zu 0,1 µm auszuführen. Insbesondere können mit pneumatischen Messvorrrichtungen statische und/oder dynamische Messungen geometrischer Eigenschaften wie Geradheit, Ebenheit, Rundheit, Zylinderform, Profil, Rechtwinkligkeit, Parallelität, Position, Konzentrizität, Symmetrie und Rundlauf gemessen werden.

Die bekannten pneumatischen Messvorrrichtungen weisen einen Grundkörper, der eine Wandlereinheit zur Wandlung pneumatischer Signale in elektrische Signale aufweist, und einen auswechselbaren, lösbar mit dem Grundkörper verbindbaren und in einer Messposition mit dem Grundkörper verbundenen Düsenkörper auf, an oder in dem wenigstens eine Düse der pneumatischen Messvorrichtung gebildet ist.

Zur Anpassung an unterschiedliche Messaufgaben werden unterschiedliche Düsenkörper verwendet, wobei es zur Vermeidung von Messfehlern erforderlich ist, die Messvorrichtung nach dem Wechsel des Düsenkörpers zu kalibrieren. Dies ist zeitaufwendig und damit im Rahmen der industriellen Messtechnik kostenaufwändig.

Der Erfindung liegt die Aufgabe zugrunde, eine pneumatische Messvorrichtung der im Oberbegriff des Anspruchs 1 genannten Art anzugeben, die gegenüber den bekannten pneumatischen Messvorrrichtungen verbessert ist.

Diese Aufgabe wird durch die im Anspruch 1 angegebene Erfindung gelöst.

Die Erfindung sieht vor, dass mit dem Düsenkörper ein elektronisches Speicherelement fest verbunden ist, das in Messposition des Düsenkörpers an dem Grundkörper durch die Wandlereinheit auslesbar ist oder ausgelesen wird.

Auf diese Weise ist insbesondere eine automatische Kalibrierung der pneumatischen Messvorrichtung nach einem Wechsel des Düsenkörpers ermöglicht. Dies spart Zeit und damit Kosten.

Nach dem Anbringen eines Düsenkörpers an dem Grundkörper wird der Speicher des fest mit dem Düsenkörper verbundenen elektronischen Speicherelements durch die Wandlereinheit ausgelesen und die in dem Speicher des Speicherelements gespeicherten Daten in der Wandlereinheit verarbeitet

Im einfachsten Fall können die auf dem Speicherelement gespeicherten Daten den Düsenkörper repräsentieren. Bei einer darauffolgenden Messung werden die resultierenden pneumatischen Messwerte in der Wandlereinheit unter Berücksichtigung des Typs des Düsenkörpers (Düsentyps) verarbeitet bzw. gewandelt. Auf diese Weise sind Messfehler vermieden, die sich daraus ergeben könnten, dass nach dem Wechseln des Düsenkörpers von einer Bedienperson irrtümlicherweise einen falscher Düsentyp eingegeben wird und dementsprechend die pneumatischen Messwerte in der Wandlereinheit fehlerhaft verarbeitet bzw. gewandelt werden.

Die Erfindung bietet darüber hinaus die Möglichkeit, das Grundprinzip der Erfindung zur Erzielung einer höheren Messgenauigkeit zu verfeinern. Hierzu kann der Düsenkörper vor seiner Benutzung mittels einer geeigneten externen Messvorrichtung hochpräzise vermessen werden, um seine Geometrie bzw. Abweichungen seiner Geometrie von einem idealen Düsenkörper, der exakt die gewünschte Geometrie hat, zu ermitteln. Die hierbei ermittelten Werte bzw. hieraus resultierende Korrekturwerte können dann zur Korrektur der Messwerte der mit dem Düsenkörper versehenen pneumatischen Messvorrichtung bzw. zur Kalibrierung der Messvorrichtung verwendet werden. Auf diese Weise können bei der Verarbeitung bzw. Wandlung der pneumatischen Messwerte nicht nur der Typ des Düsenkörpers, sondern seine konkreten geometrischen Eigenschaften bei der Verarbeitung bzw.

Wandlung der Messwerte berücksichtigt werden. Auf diese Weise ist die Messgenauigkeit weiter erhöht.

Die Art und der Ort der Anbringung des elektronischen Speicherelements an bzw. in dem Düsenkörper sind entsprechend den jeweiligen Anforderungen innerhalb weiter Grenzen wählbar. Eine vorteilhafte Weiterbildung der Erfindung sieht insoweit vor, dass das elektronische Speicherelement in den Düsenkörper integriert ist. Auf diese Weise ist das elektronische Speicherelement vor Umwelteinflüssen und mechanischen Belastungen geschützt, sodass Fehlfunktionen des Speicherelements zuverlässig vermieden sind.

Eine Integration des Speicherelements in den Düsenkörper kann entsprechend den jeweiligen Anforderungen und dem jeweiligen Herstellungsverfahren des Düsenkörpers auf beliebige geeignete Weise erfolgen. Beispielsweise kann das elektronische Speicherelement bei der Herstellung des Düsenkörpers in denselben eingeformt werden. Eine vorteilhafte Weiterbildung der Erfindung sieht insoweit vor, dass das elektronische Speicherelement in einer in dem Düsenkörper gebildeten Ausnehmung aufgenommen ist. Bei dieser Ausführungsform ist eine Integration des Speicherelements in den Düsenkörper auf besonders einfache Weise ermöglicht.

Eine andere vorteilhafte Weiterbildung der Erfindung sieht vor, dass an dem Grundkörper und dem Düsenkörper elektrische Kontaktmittel vorgesehen sind, die sich zum Auslesen des Speichers des elektronischen Speicherelementes in Messposition des Düsenkörpers an dem Grundkörper miteinander in Kontakt befinden. Auf diese Weise ist in der Messposition des Düsenkörpers an dem Grundkörper mit besonders einfachen, robusten und kostengünstigen Mitteln eine Datenübertragungsverbindung zwischen dem elektronischen Speicherelement des Düsenkörpers und der Wandlereinheit zum Auslesen des Speichers des Speicherelements hergestellt.

Eine vorteilhafte Weiterbildung der Erfindung sieht in diesem Zusammenhang vor, dass das elektronische Speicherelement in eine Ausnehmung in dem Düsenkörper eingesetzt ist, die zu der in Messpostion dem Grundkörper zugewandten Seite des Düsenkörpers offen ist. Auf diese Weise können Kontakte der elektrischen Kontaktmittel in der in Messposition dem Grundkörper zugewandten Kontaktfläche des Düsenkörpers offen liegen und in der gegenüberliegenden Kontaktfläche des Grundkörpers angeordnete Kontakte kontaktieren.

Eine andere vorteilhafte Weiterbildung der Erfindung sieht vor, dass die Wandlereinheit Mittel zum drahtlosen Auslesen des Speichers des elektronischen Speicherelements aufweist und das elektronische Speicherelement nach Art eines RFID-Transponders ausgebildet ist. Bei dieser Ausführungsform erfolgt das Auslesen bzw. die Datenübertragung von dem Speicherelement zu der Wandlereinheit drahtlos.

Entsprechend den jeweiligen Anforderungen und Gegebenheiten sind Art und Umfang der in dem Speicher des elektronischen Speicherelements abgespeicherten Daten innerhalb weiter Grenzen wählbar. Eine vorteilhafte Weiterbildung der Erfindung sieht insoweit vor, dass das elektronische Speicherelement zur Abspeicherung von Daten ausgebildet bzw. programmiert ist, die für den jeweiligen Düsenkörper spezifische, messrelevante Eigenschaften, insbesondere geometrische Eigenschaften, repräsentieren. Auf diese Weise ist eine an die konkrete Geometrie des verwendeten Düsenelements angepasste Korrektur der pneumatischen Messwerte ermöglicht, sodass die Messgenauigkeit der pneumatischen Messvorrichtung weiter erhöht ist. Beispielsweise und insbesondere ermöglichen diese Daten eine Wandlung bzw. Korrektur der Messwerte unter Berücksichtigung beispielsweise der Linearität und des Messbereiches des verwendeten Düsenkörpers.

Art und Aufbau des elektronischen Speicherelements sind entsprechend den jeweiligen Anforderungen und Gegebenheiten innerhalb weiter Grenzen wählbar. Eine vorteilhafte Weiterbildung der Erfindung sieht insoweit vor, dass das elektronische Speicherelement ein EPROM bzw. ein EEPROM aufweist. Entsprechende Speicherbausteine bestehen als einfache und kostengünstige Standardbauteile zur Verfügung.

Eine andere vorteilhafte Weiterbildung der Erfindung sieht vor, dass das elektronische Speicherelement zur Abspeicherung von Daten ausgebildet bzw. programmiert ist, die Korrekturwerte repräsentieren, mit denen Messwerte der pneumatischen Messvorrichtung automatisch korrigiert werden. Wie oben ausgeführt, kann eine entsprechende Korrektur beispielsweise die Linearität und den Messbereich des verwendeten Düsenkörpers umfassen.

Grundsätzlich kann das Auslesen des Speichers des elektronischen Speicherelements durch eine Bedienperson gestartet werden. In diesem Zusammenhang sieht eine vorteilhafte Weiterbildung der Erfindung vor, dass die Wandlereinheit derart ausgebildet und programmiert, dass das elektronische Speicherelement eines an dem Grundkörper angebrachten, sich in Messposition befindenden Düsenkörpers automatisch ausgelesen wird. Auf diese Weise ist der Messvorgang weiter vereinfacht, indem nach einem Wechsel des Düsenelements das Düsenelement automatisch erkannt wird und sich damit sich das Eingreifen einer Bedienperson in diesem Teil des Messprozesses erübrigt.

Auch eine auf das Auslesen des Speichers des Speicherelements folgende Kalibrierung der Messvorrichtung kann durch eine Bedienperson gestartet werden. Entsprechend einer anderen vorteilhaften Weiterbildung der Erfindung ist die Wandlereinheit jedoch derart ausgebildet und programmiert, dass sie nach dem Verbinden des Düsenkörpers mit dem Grundkörper und dem Auslesen des elektronischen Speicherelements automatisch kalibriert wird. Bei dieser Ausführungsform erfolgt auch die Kalibrierung der Messvorrichtung automatisch.

Eine andere vorteilhafte Weiterbildung der Erfindung sieht vor, dass die einander zugewandten Flächen des Grundkörpers und des Düsenkörpers derart ausgebildet sind, dass sie in Messposition des Düsenkörpers an dem Grundkörper dichtend aneinander anliegen. Auf diese Weise sind Kontakte, über die die Wandlereinheit mit dem elektronischen Speicherelement in Datenübertragungsverbindung steht, gegen Feuchtigkeit und Flüssigkeiten geschützt.

Gemäß einer anderen zweckmäßigen Weiterbildung der Erfindung weist das elektronische Speicherelement ein insbesondere durch eine Platine gebildetes Trägerelement auf, auf dem wenigstens ein Speicherbaustein angeordnet ist.

Eine Weiterbildung der vorgenannten Ausführungsform sieht vor, dass das Trägerelement rotationssymmetrisch oder annähernd rotationssymmetrisch ausgebildet ist zum Einsetzen in eine komplementär geformte rotationssymmetrische oder annähernd rotationssymmetrische Ausnehmung in dem Düsenkörper, wobei die elektrischen Kontaktmittel zueinander konzentrische, in Radialrichtung zueinander beabstandete elektrische Kontaktflächen aufweisen, die vorzugsweise in Umfangsrichtung über 360° durchgehend ausgebildet sind, wobei vorzugsweise eine der Kontaktflächen als zentrisch angeordnete Kreisfläche und die andere Kontaktfläche als in Radialrichtung zu der Kreisfläche beabstandete Ringfläche ausgebildet ist. Bei dieser Ausführungsform kann die Kontaktierung der in Radialrichtung zueinander beabstandeten und gegeneinander elektrisch isolierten Kontaktflächen des elektronischen Speicherelements auf Seiten der Wandlereinheit durch zwei vorzugsweise federnde Kontaktstifte an dem Grundkörper erfolgen, von denen der erste Kontaktstift bezogen auf das rotationssymmetrische Trägerelement des Speicherelements zentrisch angeordnet ist und in der Messposition die zentrische Kreisfläche des Speicherelements kontaktiert, während der zweite Kontaktstift zu dem ersten Kontaktstift radial beabstandet ist und in der Messposition die Ringfläche kontaktiert. Diese Ausführungsform hat den Vorteil, dass in der Messposition ein elektrischer Kontakt zu dem Speicherelement unabhängig davon hergestellt wird, in welcher Drehlage das Trägerelement an dem Düsenkörper angeordnet ist. Dieser Ausführungsform kommt unabhängig von den weiteren Merkmalen der Erfindung eine eigenständige erfinderische Bedeutung zu.

Unter einer festen Verbindung des elektronischen Speicherelements mit dem Düsenkörper wird erfindungsgemäß eine Verbindung verstanden, durch die sichergestellt ist, dass sich das Speicherelement bei einer Handhabung des Düsenkörpers nicht von demselben löst, sodass der Speicherelement stets mit dem Düsenkörper verbunden bleibt.

Aufgrund seiner speziellen Ausgestaltung unter Einbeziehung eines elektronischen Speicherelements stellt der Düsenkörper der erfindungsgemäßen pneumatischen Messvorrichtung ein wesentliches Element der Erfindung dar.

Die Erfindung wird nachfolgend unter Bezugnahme auf die beigefügte stark schematisierte Zeichnung anhand eines Ausführungsbeispiels näher erläutert. Es ist für den Fachmann ersichtlich, dass die einzelnen Merkmale des Ausführungsbeispiels das Ausführungsbeispiel jeweils für sich genommen, also unabhängig von den weiteren Merkmalen, weiterbilden. Damit ist für den Fachmann auch ersichtlich, dass alle beschriebenen, in der Zeichnung dargestellten und in den Patentansprüchen beanspruchten Merkmale für sich genommen sowie in beliebiger technisch sinnvoller Kombination miteinander den Gegenstand der Erfindung bilden, unabhängig von ihrer Zusammenfassung in den Patentansprüchen und deren Rückbezügen sowie unabhängig von ihrer konkreten Beschreibung bzw. Darstellung in der Zeichnung. Zum Gegenstand und Offenbarungsgehalt der vorliegenden Anmeldung gehören Unterkombinationen der Patentansprüche, bei denen wenigstens ein Merkmal eines Patentanspruchs weggelassen oder durch ein anderes Merkmal ersetzt ist.

Es zeigt:
- Fig. 1: in einer Schemaskizze ein Ausführungsbeispiel einer pneumatischen Messvorrichtung mit einem Grundkörper und einem Düsenkörper,
- Fig. 2: eine Ansicht auf die dem Grundkörper zugewandte Fläche des Düsenkörpers und
- Fig. 3: den Düsenkörper in Messposition an dem Grundkörper.

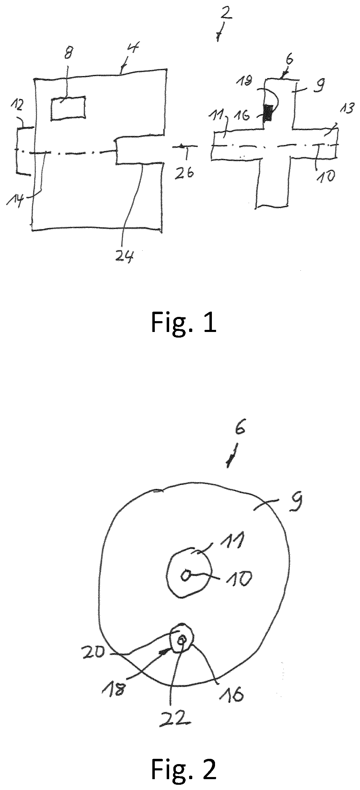

Nachfolgend wird unter Bezugnahme auf Fig. 1 bis Fig. 3 ein Ausführungsbeispiel einer erfindungsgemäßen pneumatischen Messvorrichtung näher erläutert.

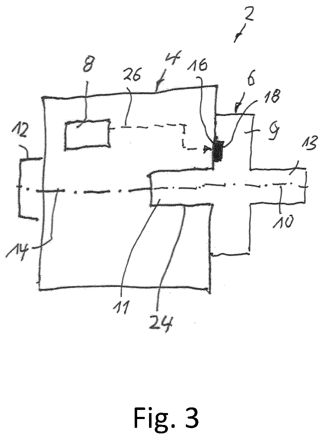

In Fig. 1 ist in einer Schemaskizze ein Ausführungsbeispiel einer erfindungsgemäßen pneumatischen Messvorrichtung 2 dargestellt, die einen Grundkörper 4 und einem auswechselbaren, lösbar mit dem Grundkörper 4 verbindbaren und in einer Messposition mit dem Grundkörper 4 verbundenen Düsenkörper 6 aufweist. In Fig. 1 sind der Grundkörper 4 und der Düsenkörper 6 getrennt voneinander dargestellt. In der Messposition (vgl. Fig. 3) ist der Düsenkörper 6 an dem Grundkörper 4 angebracht. In dieser Messposition können mittels der Messvorrichtung 2 Messungen ausgeführt werden.

In dem Grundkörper 4, der beispielsweise gehäuseartig ausgebildet sein kann, ist eine Wandlereinheit 8 zur Wandlung pneumatischer Signale in elektrische Signale aufgenommen.

Der grundsätzliche Aufbau einer pneumatischen Messvorrichtung ist dem Fachmann allgemein bekannt, beispielsweise und insbesondere durch DIN 2271, und wird daher hier nur insoweit näher erläutert, wie es für das Verständnis der Erfindung erforderlich ist.

Der Düsenkörper 6 ist zur Anpassung an unterschiedliche Messaufgaben auswechselbar. Dementsprechend steht für eine Mehrzahl von Messaufgaben eine Mehrzahl von Düsenkörper zur Verfügung. In dem Düsenkörper 6 ist wenigstens eine Düse der pneumatischen Messvorrichtung 2 gebildet. Es ist dem Fachmann allgemein bekannt, dass eine pneumatische Messvorrichtung neben einer Vordüse, mittels derer entsprechend dem jeweiligen Funktionsprinzip der pneumatischen Messvorrichtung die eigentliche Messung durchgeführt wird, eine Messdüse aufweist, die wenigstens eine Ausströmungsöffnung bildet, aus der Druckluft auf das zu vermessende Werkstück ausströmt. Bei dem dargestellten Ausführungsbeispiel ist die Vordüse in dem Düsenkörper 6 gebildet. Die Messdüse kann ebenfalls an dem Düsenkörper 6 gebildet sein oder über einen Schlauch mit den Düsenkörper 6 verbunden sein.

Ein in Axialrichtung des Düsenkörpers 6 verlaufender Strömungskanal ist in Fig. 1 durch einen strichpunktierte Linie 10 symbolisiert. Ein von einem Druckluftanschluss 12 des Grundkörpers 4 in Strömungsrichtung durch den Grundkörper 4 verlaufender Strömungskanal ist durch eine strichpunktierte Linie 14 symbolisiert. Der Düsenkörper 6 ist im Wesentlichen rotationssymmetrisch ausgebildet und weist ein flanschartiges Mittelteil 9 auf, von dem sich an beiden Seiten zylindrische Endstücke 11, 13 erstrecken.

Erfindungsgemäß ist mit dem Düsenkörper 6 ein elektronisches Speicherelement 16 fest verbunden, das in Messposition des Düsenkörpers 6 an dem Grundkörper 4 durch die Wandlereinheit 8 auslesbar ist und ausgelesen wird.

Bei dem dargestellten Ausführungsbeispiel ist das Speicherelement 16 in den Düsenkörper 6 integriert, indem es in einer in den Düsenkörper 6 gebildeten Ausnehmung 18 aufgenommen ist, die zu der in Messposition dem Grundkörper zugewandten Seite des Düsenkörpers 6 offen ist. Der Speicherelement 16 kann beispielsweise in die Ausnehmung 18 eingeklebt sein. Bei dem dargestellten Ausführungsbeispiel weist das Speicherelement 16 ein EEPROM auf, das auf einer kreisförmig begrenzten, rotationssymmetrischen Platine als Trägerelement angeordnet ist. Das Trägerelement kann beispielsweise in die Ausnehmung 18 eingeklebt sein. Die kreisförmige Begrenzung des Trägerelementes und damit des elektronischen Speicherelement 16 ist aus Fig. 2 ersichtlich.

Bei dem dargestellten Ausführungsbeispiel erfolgt das Auslesen von Daten aus dem Speicher des Speicherelements 16 durch die Wandlereinheit 8 leitungsgebunden. Hierzu sind an dem Grundkörper 4 und dem Düsenkörper 6 elektrische Kontaktmittel vorgesehen sind, die sich zum Auslesen des elektronischen Speicherelements 16 in Messposition des Düsenkörpers 6 an dem Grundkörper 4 miteinander in Kontakt befinden. Kontakte des Speicherelements 16 sind in Fig. 2 symbolisch dargestellt und mit den Bezugszeichen 20, 22 bezeichnet.

Bei dem dargestellten Ausführungsbeispiel weisen die Kontaktmittel an dem Speicherelement 16 eine bezogen auf die Rotationssymmetrieachse des Trägerelements bzw. Speicherelements 16 zentrisch angeordnete kreisförmige erste Kontaktfläche 22 und eine gegenüber dieser elektrisch isolierte und radial beabstandete ringförmige zweite Kontaktfläche 20 auf, die in Umfangsrichtung der Rotationssymmetrieachse über einen Winkel von 360° durchgehend ist.

Zur Kontaktierung der Kontaktflächen 20, 22 sind an dem Grundkörper 4 in der dem Düsenkörper 6 zugewandten Fläche zwei federnde elektrische Kontaktstifte angeordnet, von denen der erste in der Messposition die kreisförmige erste Kontaktfläche 22 kontaktiert. Der zweite Kontaktstift ist relativ zu dem ersten Kontaktstift so angeordnet, dass er die ringförmige zweite Kontaktfläche 20 kontaktiert. Auf diese Weise ist in der Messposition ein elektrischer Kontakt zwischen der Wandlereinheit 8 und dem Speicherelement 16 sichergestellt unabhängig davon, in welcher Drehlage bezogen auf die Rotationssymmetrieachse das Speicherelement 16 in die Ausnehmung 18 eingeklebt ist.

In dem Speicher des Speicherelements 16 können Daten gespeichert sein, die die exakte Geometrie des verwendeten Düsenkörpers 6 repräsentieren, insbesondere die konkrete Geometrie der Düse(n) und des Strömungskanals 10. Zur Ermittlung der exakten Geometrie des Düsenkörpers 6 wird dieser nach seiner Fertigung einmalig mit einer externen Messvorrichtung hochpräzise vermessen. Die resultierenden Daten werden dann in dem Speicher des Speicherelements 16 abgespeichert. Eine Umsetzung dieser Daten in Korrekturdaten kann in der Wandlereinheit 8 erfolgen. Es ist jedoch auch möglich, die entsprechenden Korrekturdaten extern zu ermitteln und in dem Speicher der Speicherelements 16 abzuspeichern, sodass die Wandlereinheit 8 nach dem Auslesen des Speichers der Speicherelements 16 unmittelbar auf die Korrekturdaten zugreifen kann.

Bei dem dargestellten Ausführungsbeispiel sind in dem Speicher der Speicherelement 16 entsprechende Korrekturdaten sowie der Düsentyp des Düsenkörpers 6 gespeichert.

Um den Düsenkörper 6 an dem Grundkörper 4 anzubringen, wird der Düsenkörper mit seinem dem Grundkörper 4 zugewandten Endstück 11 in eine an dem Grundkörper 4 gebildete, zu dem Endstück 11 im Wesentlichen komplementär geformte Ausnehmung 24 axial eingeschoben und eingesetzt, wie in Fig. 1 durch einen Pfeil 26 angedeutet. In der in Fig. 3 dargestellten Messposition liegen die einander zugewandten axialen Endflächen des Grundkörpers 4 und des Flansches 9 des Düsenkörpers 6 aneinander an, wobei die Strömungskanäle 10, 14 miteinander kommunizieren und die Kontakte 20, 22 des Speicherelements 16 die Kontakte kontaktieren, die in der dem Düsenkörper 6 zugewandten axialen Endfläche des Grundkörpers 4 gebildet sind, wie oben erläutert. Dadurch ist leitungsgebunden eine Datenübertragungsverbindung zwischen der Wandlereinheit 8 und dem Speicherelement 16 hergestellt, sodass die Wandlereinheit 8 den Speicher des Speicherelements 16 auslesen kann, wie in Fig. 3 durch eine gestrichelte Linie 26 angedeutet.

Die Funktionsweise der Erfindung ist wie folgt:
Zur Durchführung einer Messung mittels der pneumatischen Messvorrichtung 2 wird der Düsenkörper 6 an dem Grundkörper 4 angebracht und befindet sich dann in der in Fig. 3 dargestellten Messposition. Wenn sich der Düsenkörper 6 in Messposition befindet liest, die Wandlereinheit 8 den Speicher des Speicherelements 16 automatisch aus, sodass die in dem Speicher des Speicherelements 16 gespeicherten Daten in der Wandlereinheit 8 zur Verfügung stehen. Anhand dieser Daten erkennt die Wandlereinheit 8 den Typ des Düsenkörpers 6 und erhält Korrekturdaten, die die Abweichung der Geometrie des Düsenkörpers 6 gegenüber einem idealen Düsenkörper repräsentieren. Diese Korrekturdaten werden bei der Wandlung der sich bei der Messung ergebenden pneumatischen Signale in elektrische Signale bzw. bei der Verarbeitung der Signale korrigierend berücksichtigt.

Durch die automatische Erkennung des Typs des Düsenkörpers 6 sind Messfehler vermieden, die sich bei einer fehlerhaften manuellen Eingabe des Düsentyps ergeben können. Dadurch, dass anhand der Korrekturdaten Abweichungen der Geometrie des verwendeten Düsenkörpers 6 von einer idealen Geometrie berücksichtigt werden, ist die Messgenauigkeit weiter verbessert.

Im Ergebnis ermöglicht die Erfindung mit besonders einfachen und kostengünstigen Mitteln eine wesentliche Verbesserung der Funktion und Messgenauigkeit von pneumatischen Messvorrrichtungen.

### Bezugszeichenliste

- 2: pneumatische Messvorrichtung
- 4: Grundkörper
- 6: Düsenkörper
- 8: Wandlereinheit
- 10: Strömungskanal
- 12: Druckluftanschluss
- 14: Strömungskanal
- 16: Speicherelement
- 18: Ausnehmung
- 20: Kontakt
- 22: Kontakt
- 24: Ausnehmung
- 26: gestrichelte Linie

## Patentansprüche

1. Pneumatische Messvorrichtung (2),
mit einem Grundkörper (4), der eine Wandlereinheit (8) zur Wandlung pneumatischer Signale in elektrische Signale aufweist, und
mit einem auswechselbaren, lösbar mit dem Grundkörper (4) verbindbaren und in einer Messposition mit dem Grundkörper (4) verbundenen Düsenkörper (6), an oder in dem wenigstens eine Düse der pneumatischen Messvorrichtung (2) gebildet ist, **dadurch gekennzeichnet,**
**dass** mit dem Düsenkörper (6) ein elektronisches Speicherelement (16) fest verbunden ist, das in Messposition des Düsenkörpers (6) an dem Grundkörper (4) durch die Wandlereinheit auslesbar ist oder ausgelesen wird.

2. Pneumatische Messvorrichtung nach Anspruch 1, **dadurch gekennzeichnet, dass** das elektronische Speicherelement (16) in den Düsenkörper (6) integriert ist.

3. Pneumatische Messvorrichtung nach Anspruch 2, **dadurch gekennzeichnet, dass** das elektronische Speicherelement (16) in einer in dem Düsenkörper (6) gebildeten Ausnehmung (18) aufgenommen ist.

4. Pneumatische Messvorrichtung nach einem der vorhergehenden Ansprüche, **dadurch gekennzeichnet, dass** an dem Grundkörper (4) und dem Düsenkörper (6) elektrische Kontaktmittel vorgesehen sind, die sich zum Auslesen des Speichers des elektronischen Speicherelementes (16) in Messposition des Düsenkörpers (6) an dem Grundkörper (4) miteinander in Kontakt befinden.

5. Pneumatische Messvorrichtung nach Anspruch 3 oder 4, **dadurch gekennzeichnet, dass** das elektronische Speicherelement (16) in eine Ausnehmung in dem Düsenkörper (6) eingesetzt ist, die zu der in Messposition dem Grundkörper (4) zugewandten Seite des Düsenkörpers (6) offen ist.

6. Pneumatische Messvorrichtung nach einem der vorhergehenden Ansprüche, **dadurch gekennzeichnet, dass** die Wandlereinheit (8) Mittel zum drahtlosen Auslesen des Speichers des elektronischen Speicherelements (16) aufweist und das elektronische Speicherelement (16) nach Art eines RFID-Transponders ausgebildet ist.

7. Pneumatische Messvorrichtung nach einem der vorhergehenden Ansprüche, **dadurch gekennzeichnet, dass** das elektronische Speicherelement (16) zur Abspeicherung von Daten ausgebildet bzw. programmiert ist, die für den jeweiligen Düsenkörper spezifische, messrelevante Eigenschaften, insbesondere geometrische Eigenschaften, repräsentieren.

8. Pneumatische Messvorrichtung nach einem der vorhergehenden Ansprüche, **dadurch gekennzeichnet, dass** das elektronische Speicherelement (16) ein EPROM bzw. ein EEPROM aufweist.

9. Pneumatische Messvorrichtung nach einem der vorhergehenden Ansprüche, **dadurch gekennzeichnet, dass** das elektronische Speicherelement (16) zur Abspeicherung von Daten ausgebildet bzw. programmiert ist, die Korrekturwerte repräsentieren, mit denen Messwerte der pneumatischen Messvorrichtung in Abhängigkeit von Eigenschaften des Düsenkörpers (6) automatisch korrigiert werden.

10. Pneumatische Messvorrichtung nach einem der vorhergehenden Ansprüche, **dadurch gekennzeichnet, dass** die Wandlereinheit (8) derart ausgebildet und programmiert, dass der Speicher des elektronischen Speicherelements (16) des an dem Grundkörper (4) angebrachten, sich in Messposition befindenden Düsenkörpers (6) automatisch ausgelesen wird.

11. Pneumatische Messvorrichtung nach einem der vorhergehenden Ansprüche, **dadurch gekennzeichnet, dass** die Wandlereinheit (8) derart ausgebildet und programmiert ist, dass die Messvorrichtung (2) nach dem Anbringen des Düsenkörpers (6) an dem Grundkörper (4) und dem Auslesen des Speichers des elektronischen Speicherelements (16) automatisch kalibriert wird.

12. Pneumatische Messvorrichtung nach einem der vorhergehenden Ansprüche, **dadurch gekennzeichnet, dass** die einander zugewandten Flächen des Grundkörpers (4) und des Düsenkörpers (6) derart ausgebildet sind, dass sie in Messposition des Düsenkörpers (6) an dem Grundkörper (4) dichtend aneinander anliegen.

13. Pneumatische Messvorrichtung nach einem der vorhergehenden Ansprüche, **dadurch gekennzeichnet, dass** das elektronische Speicherelement (16) ein insbesondere durch eine Platine gebildetes Trägerelement aufweist, auf dem wenigstens ein Speicherbaustein angeordnet ist.

14. Pneumatische Messvorrichtung nach einem der vorhergehenden Ansprüche, **dadurch gekennzeichnet, dass** das Trägerelement rotationssymmetrisch oder annähernd rotationssymmetrisch ausgebildet ist zum Einsetzen in eine komplementär geformte rotationssymmetrische oder annähernd rotationssymmetrische Ausnehmung in dem Düsenkörper (6), wobei die elektrischen Kontaktmittel zueinander konzentrische, in Radialrichtung zueinander beabstandete elektrische Kontaktflächen (20, 22) aufweisen, die vorzugsweise in Umfangsrichtung über 360° durchgehend ausgebildet sind, wobei vorzugsweise eine der Kontaktflächen (22) als zentrisch angeordnete Kreisfläche und die andere Kontaktfläche (20) als in Radialrichtung zu der Kreisfläche beabstandete Ringfläche ausgebildet ist..
